# FASCICULE DE BREVET EUROPEEN

(11) **EP 3 390 152 B1**
(45) Date de publication et mention de la délivrance du brevet: **11.10.2023**
(21) Numéro de dépôt: 16815609.9
(22) Date de dépôt: 28.11.2016
(51) Int. Cl.: B60Q 1/00, F21S 45/10, F21S 45/30

(54) **DISPOSITIF DE SIGNALISATION LUMINEUSE D'UN VEHICULE AUTOMOBILE**
LEUCHTENDE SIGNALISIERUNGSEINRICHTUNG FÜR EIN KRAFTFAHRZEUG
LUMINOUS SIGNALING DEVICE FOR A MOTOR VEHICLE

(30) Priorité: 14.12.2015 FR 1562257
(43) Date de publication de la demande: 24.10.2018
(73) Titulaire: PSA Automobiles SA, 78300 Poissy (FR)
(72) Inventeur: LE DALL, Christophe, 92150 Suresnes (FR); GONCALVES, Whilk Marcelino, 75013 Paris (FR); LARRIBEAU, Nathalie, 78310 Maurepas (FR); MOLTO, Valerie, 78000 Versailles (FR); DOAN, Jean François, 78300 Poissy (FR); POILANE, Philippe, 92160 Antony (FR)
(86) Numéro de dépôt international: PCT/FR2016/053114
(87) Numéro de publication internationale: WO 2017/103370

(56) Documents cités:
- WO-A1-2009/038052
- DE-A1-102007 042 624
- FR-A1- 2 997 751
- US-A- 4 366 530

## Description

L'invention concerne les dispositifs de signalisation, destinés plus particulièrement aux véhicules automobiles. L'invention porte plus précisément sur un dispositif de signalisation lumineuse comprenant un système de canalisation.

De manière connue, des dispositifs de signalisation lumineuse sont disposés à l'avant et à l'arrière d'un véhicule automobile afin, d'une part, d'éclairer la route pour améliorer la visibilité du conducteur du véhicule, notamment en condition nocturne, et, d'autre part, de signaliser la position du véhicule aux autres usagers de la route. En pratique, un dispositif de signalisation lumineuse avant comprend principalement les feux de position, les feux de croisement et les feux de route dont les différentes intensités lumineuses permettent d'adapter l'éclairage aux conditions lumineuses extérieures. Pour ce faire, un dispositif de signalisation lumineuse avant comprend une pluralité de sources lumineuses pouvant être actionnées afin d'activer les différents feux.

De manière classique, les différentes sources lumineuses se présentent sous la forme d'une pluralité d'ampoules à incandescence halogène montées à l'intérieur d'un boîtier dont la face avant est fermée de manière étanche par de la résine transparente afin de permettre à la lumière émise par les ampoules d'être orientée vers l'avant du véhicule. Une telle face avant a pour fonction de protéger les ampoules des conditions extérieures, notamment de la pluie tout en rendant le boîtier aérodynamique en guidant l'air. De plus, des projecteurs d'eau peuvent être placés devant la face avant afin de la nettoyer.

Aujourd'hui, il existe des dispositifs de signalisation lumineuse ne comprenant pas de face avant transparente. De tels dispositifs de signalisation lumineuse comprennent une pluralité de sources lumineuses séparées et protégées séparément les unes des autres. Aussi, l'installation d'un projecteur d'eau pour chaque source lumineuse engendrerait un nombre important de pièce ce qui serait coûteux. De plus, de telles sources lumineuses ne sont pas aérodynamiques et génèrent des nuisances sonores lorsque le véhicule avance.

On connait du document US4366530A, un dispositif de signalisation lumineuse avec un système de canalisation. Ce dispositif ne permet pas de protéger efficacement les sources lumineuses de choc d'objet venant de l'avant du véhicule. Il n'est pas par ailleurs adapté pour répondre aux contraintes aérodynamiques recherchées par la présente invention.

L'invention vise donc à résoudre ces inconvénients en proposant un dispositif de signalisation lumineuse aérodynamique et protégeant les sources lumineuses.

Pour parvenir à ce résultat, la présente invention est telle que définie dans la revendication 1.

Grâce au dispositif de signalisation lumineuse selon l'invention, tout objet venant de l'avant du véhicule est évacué hors dudit dispositif de signalisation lumineuse grâce au système de canalisation. De plus, un tel système de canalisation guide le flux d'air traversant le dispositif de signalisation lumineuse ce qui limite les nuisances sonores. Enfin, un tel flux d'air permet de nettoyer la paroi avant de chaque source de lumière.

L'invention concerne également un véhicule comprenant au moins un dispositif de signalisation lumineuse tel que décrit précédemment.

D'autres caractéristiques et avantages de l'invention apparaîtront à la lecture de la description détaillée des modes de réalisation de l'invention, donnés à titre d'exemple uniquement, et en référence aux dessins qui montrent :
- figure 1, un schéma de face d'une forme de réalisation d'un dispositif de signalisation lumineuse selon l'invention,
- figure 2, un schéma en coupe du dispositif de la figure 1, et
- figure 3, un schéma de côté d'un système d'évacuation du dispositif de la figure 1.

Dans ce qui va suivre, les modes de réalisation décrits s'attachent plus particulièrement à une mise en oeuvre du dispositif selon l'invention dans le cadre d'un véhicule automobile. Cependant, toute mise en oeuvre dans un contexte différent, en particulier dans tout type de véhicule, est également visée par la présente invention.

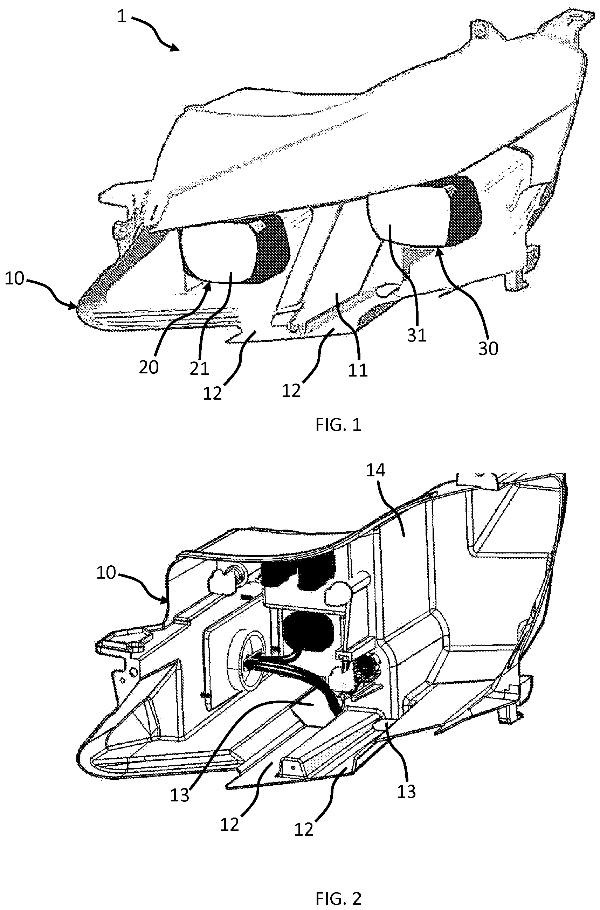

La figure 1 représente un dispositif de signalisation lumineuse 1 selon l'invention, et plus particulièrement, en l'espèce, un dispositif avant de signalisation lumineuse. Un tel dispositif de signalisation lumineuse 1 est ouvert, autrement dit, il ne comprend pas de paroi avant de protection.

Ledit dispositif de signalisation 1 comprend un support de montage 10, une première source de lumière 20 et une deuxième source de lumière 30 montées sur le support de montage 10.

Chaque source de lumière 20, 30 comprend des diodes électroluminescentes, également désignées DEL ou LED pour Light-Emitting Diode en langue anglaise. Il va de soi que les sources de lumière 20, 30 pourraient, de manière alternative, comprendre au moins une ampoule à incandescence ou tout autre type de source de lumière adaptée. Une source de lumière 20, 30 est commandée, de manière automatique ou manuelle, pour émettre de la lumière vers l'avant du véhicule afin d'éclairer la route à l'avant du véhicule et signaler la position dudit véhicule aux autres usagers de la route. La source de lumière 20, 30 est alimentée en électricité par le véhicule. Pour protéger la source de lumière 20, 30, une paroi avant 21, 31 transparente est montée devant chaque source de lumière 20, 30. Une telle paroi avant 21, 31 est réalisé en un matériau transparent et résistant, tel que de la résine.

Il a été présenté un dispositif de signalisation lumineuse 1 comprenant deux sources de lumière 20, 30, mais il va de soi qu'il pourrait en comprendre plus de deux.

Le support de montage 10 est réalisé dans un matériau dont le coût est faible, de préférence de l'ABS ou un mélange d'ABS et de polycarbonate. Le support 10 est adapté pour être monté à l'avant d'un véhicule automobile (non représenté). Le support 10 permet également le montage des sources de lumière 20, 30 afin de former le dispositif de signalisation lumineuse 1. En référence à la figure 1, le support de montage 10 comprend une barre de protection 11 montée devant les sources de lumière 20, 30 afin de les protéger des chocs et de tout objet venant de l'avant du véhicule. Dans cet exemple, la barre de protection 11 est placée entre la première source de lumière 20 et la deuxième source de lumière 30.

De plus, le support de montage 10 comprend un système de canalisation des objets venant de l'avant du véhicule, notamment lorsque le véhicule avance.

Le système de canalisation comprend deux gouttières 12 et deux orifices d'évacuation 13 comme illustré à la figure 2.

Les gouttières 12 sont placées dans une partie basse de la structure de montage 10, sous les sources de lumière 20, 30 afin de guider tout objet venant de l'avant du véhicule, notamment l'air et l'eau. Une gouttière 12 est placée sous chaque source de lumière 20, 30. Chaque gouttière 12 s'étend d'avant en arrière afin de faciliter le guidage d'un objet dans la gouttière 12 sous l'effet de l'air lorsque le véhicule avance.

Un orifice d'évacuation 13 est placé au niveau d'une extrémité arrière de chaque gouttière 12 afin d'évacuer les objets du dispositif de signalisation lumineuse 1. Un tel orifice d'évacuation 13 est placé dans une partie basse du support de montage 10 afin d'évacuer les objets par gravité. Un tel orifice d'évacuation 13 est adapté pour guider l'évacuation des objets à distance du moteur du véhicule afin qu'un tel objet n'endommage pas le véhicule. Avantageusement, l'air s'écoule de manière laminaire à travers la gouttière 12 et l'orifice d'évacuation arrière 13, ce qui permet de générer un flux d'évacuation des objets dans le système de canalisation. Un tel écoulement laminaire de l'air permet de limiter les nuisances sonores, telles que les sifflements, engendrées par l'écoulement d'air dans le dispositif de signalisation lumineuse 1.

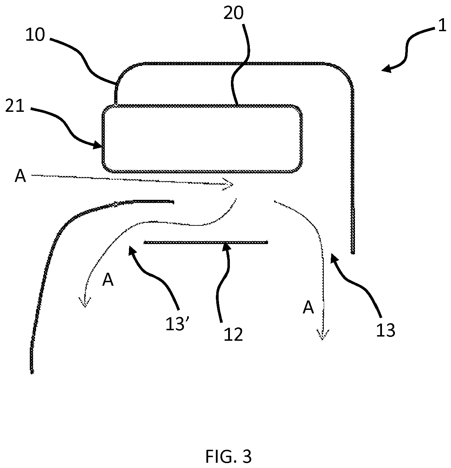

Comme illustré à la figure 3, l'utilisation d'une telle gouttière 12 et d'un tel orifice d'évacuation 13 permet d'évacuer tout objet venant de l'avant du véhicule en le guidant hors du dispositif de signalisation lumineuse 1. Autrement dit, tout objet venant de l'avant du véhicule traverse le dispositif de signalisation lumineuse 1 par le système de canalisation. Avantageusement, un tel guidage est permis grâce à l'air entrant dans le dispositif de signalisation lumineuse 1 lorsque le véhicule avance.

Comme illustré à la figure 2, le support de montage 10 comprend en outre, au niveau d'une partie arrière, de préférence dans le prolongement des gouttières 12, au moins une paroi 14 de protection du compartiment moteur du véhicule. Une telle paroi de protection 14 est ainsi adaptée pour empêcher un objet entrant dans le dispositif de signalisation lumineuse 1 d'entrer dans ledit compartiment moteur.

En référence à la figure 3, le support de montage 10 comprend un orifice d'évacuation 13' placé à une extrémité avant de chaque gouttière 12 afin de générer un flux d'air turbulent dans le dispositif de signalisation lumineuse 1.

Grâce au système de canalisation selon l'invention, l'eau de pluie est avantageusement évacuée hors du dispositif de signalisation lumineuse 1, ce qui prévient tout risque électrique. De plus, tout objet venant de l'avant du véhicule est évacué hors du dispositif de signalisation lumineuse 1, les objets de grandes tailles étant bloqués par la barre de protection 11. Enfin, la circulation d'air dans le système de canalisation permet de guider les objets dans le système de canalisation.

Le support de montage 10 comprend au moins une paroi de guidage, de préférence une pluralité de parois de guidage entre lesquelles sont montées les sources de lumière 20, 30. Avantageusement, de telles parois de guidage sont adaptées pour guider l'air, circulant dans le dispositif de signalisation lumineuse 1, jusqu'à la paroi avant 21, 31 de chaque source de lumière 20, 30. Pour ce faire, les parois de guidage forment une conduite de guidage de l'air. Avantageusement, la conduite de guidage de l'air est sensiblement conique, autrement dit, la section de la conduite diminue d'avant en arrière jusqu'à la paroi avant 21, 31 de la source de lumière 20, 30, afin d'augmenter la vitesse de l'air à proximité de la paroi avant 21, 31. Une telle vitesse de l'air permet ainsi de nettoyer la paroi avant 21, 31. De plus, le guidage de l'air par les parois de guidage permet de limiter les nuisances sonores, telles que les sifflements, engendrées par l'écoulement d'air dans le dispositif de signalisation lumineuse 1.

Grâce au guidage de l'air vers la paroi avant 21, 31 des sources de lumières 20, 30, lesdites parois avant 21, 31 sont avantageusement nettoyées.

## Revendications

1. Dispositif (1) de signalisation lumineuse d'un véhicule automobile, ledit dispositif (1) comprenant un support de montage (10), au moins une première source de lumière (20) et une deuxième source de lumière (30) montées sur ledit support de montage (10), ledit dispositif de signalisation lumineuse (1) étant ouvert, le support de montage (10) comprenant un système de canalisation adapté pour guider et évacuer au moins un objet arrivant sur le dispositif de signalisation lumineuse (1), ledit support de montage comprenant au moins une paroi de guidage de l'air arrivant sur le dispositif (1) depuis l'extérieur du véhicule et suivant une direction dite avant, chaque source de lumière (20, 30) comprenant une paroi (21, 31) avant de protection, la paroi de guidage est adaptée pour guider l'air jusqu'aux parois avant (21, 31) des sources de lumière (20, 30), et le système de canalisation comprenant au moins une gouttière (12) de guidage du au moins un objet arrivant sur le dispositif de signalisation lumineuse (1), ledit support de montage (10) comprenant une barre de protection (11) montée devant les sources de lumière (20, 30) **caractérisé en ce que**, le système de canalisation comprend deux orifices d'évacuation (13, 13') situés au niveau d'une partie basse du support de montage (10), l'un des deux orifices (13') étant placé au niveau d'une extrémité avant de la gouttière (12), au niveau d'une partie avant du support de montage (10), et l'autre des deux orifices (13) étant placé au niveau d'une extrémité arrière de la gouttière (12), au niveau d'une partie arrière du support de montage (10).

2. Véhicule comprenant au moins un dispositif de signalisation lumineuse (10) selon la revendication précédente.

## Patentansprüche

1. Vorrichtung (1) zur Lichtsignalisierung eines Kraftfahrzeugs, wobei die Vorrichtung (1) einen Montageträger (10), mindestens eine erste Lichtquelle (20) und eine an dem Montageträger montierte zweite Lichtquelle (30) umfasst. 10), wobei die Lichtsignalvorrichtung (1) offen ist, wobei der Montageträger (10) ein Kanalsystem umfasst, das dazu geeignet ist, mindestens einen auf der Lichtsignalvorrichtung (1) ankommenden Gegenstand zu leiten und abzuleiten, wobei der Montageträger mindestens eine Wand umfasst zur Führung der an der Vorrichtung (1) ankommenden Luft von außerhalb des Fahrzeugs und in einer sogenannten Vorwärtsrichtung, wobei jede Lichtquelle (20, 30) eine Schutzwand (21, 31) aufweist, wobei die Führungswand zur Führung geeignet ist die Luft zu den Vorderwänden (21, 31) der Lichtquellen (20, 30) strömt, und das Kanalisierungssystem mindestens eine Rinne (12) zum Leiten mindestens eines an der Lichtsignaleinrichtung (1) ankommenden Objekts umfasst, besagt Montageträger (10), der eine vor den Lichtquellen (20, 30) montierte Schutzstange (11) umfasst, **dadurch gekennzeichnet, dass** das Rohrsystem zwei Abflusslöcher (13, 13') umfasst, die sich an einem unteren Teil des Montageträgers befinden (10), wobei eines der beiden Löcher (13') an einem Ende vor der Dachrinne (12) an einem vorderen Teil der Montagehalterung (10) platziert ist und das andere der beiden Löcher (13) platziert ist an einem hinteren Ende der Dachrinne (12), auf Höhe eines hinteren Teils der Montagehalterung (10).

2. Fahrzeug umfassend mindestens eine Lichtsignaleinrichtung (10) nach dem vorhergehenden Anspruch.

## Claims

1. Device (1) for light signaling of a motor vehicle, said device (1) comprising a mounting support (10), at least a first light source (20) and a second light source (30) mounted on said mounting support (10), said light signaling device (1) being open, the mounting support (10) comprising a channeling system adapted to guide and evacuate at least one object arriving on the light signaling device (1), said mounting support comprising at least one wall for guiding the air arriving on the device (1) from outside the vehicle and in a so-called forward direction, each light source (20, 30) comprising a wall (21, 31) protective front, the guide wall is adapted to guide the air to the front walls (21, 31) of the light sources (20, 30), and the channeling system comprising at least one gutter (12 ) for guiding at least one object arriving at the light signaling device (1), said mounting support (10) comprising a protective bar (11) mounted in front of the light sources (20, 30) **characterized in that**, the pipe system includes two drain holes (13, 13') located at a lower part of the mounting bracket (10), one of the two holes (13') being placed at one end front of the gutter (12), at a front part of the mounting bracket (10), and the other of the two holes (13) being placed at a rear end of the gutter (12), at the level with a rear part of the mounting bracket (10).

2. Vehicle comprising at least one light signaling device (10) according to the preceding claim.
